(19) Europäisches Patentamt
European Patent Office
Office européen des brevets

(11) EP 3 666 909 B1

(12) # EUROPEAN PATENT SPECIFICATION

(45) Date of publication and mention of the grant of the patent:
**13.10.2021 Bulletin 2021/41**

(21) Application number: **18211589.9**

(22) Date of filing: **11.12.2018**

(51) Int Cl.:
***C14C 11/00** (2006.01)*
***C08G 18/70** (2006.01)*
***C14B 1/56** (2006.01)*
***C09D 11/32** (2014.01)*
***C09D 11/30** (2014.01)*
***C09D 175/04** (2006.01)*
***C09D 11/101** (2014.01)*
***C09D 175/16** (2006.01)*

(54) **DECORATED NATURAL LEATHER**

VERZIERTES NATURLEDER

CUIR NATUREL DÉCORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2020 Bulletin 2020/25**

(73) Proprietor: **AGFA NV**
**2640 Mortsel (BE)**

(72) Inventors:
- **LEHERICEY, Marie**
**2640 Mortsel (BE)**
- **LOCCUFIER, Johan**
**2640 Mortsel (BE)**

(74) Representative: **Strijckers, Hans Louis P. et al**
**AGFA NV**
**Intellectual Property Department**
**Septestraat 27**
**2640 Mortsel (BE)**

(56) References cited:
**EP-A1- 3 388 490**
**DE-A1-102016 002 526**
**GB-A- 2 510 696**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to the manufacturing of decorated natural leather and leather articles therewith.

### Background Art

The manufacturing of natural leather articles is well known and can generally be split up in five phases as shown by Figure 1. The preparatory phase 1 often occurs partly in a slaughterhouse and partly in a tannery, while phases 2 to 4 occur in the tannery and phase 5 occurs at a leather article manufacturer. In a first phase, the preparatory phase, the skin is removed from the animal (flaying) and pre-treated for the second phase of tanning. The pre-treatment may involve processes such as soaking, liming, unhairing, splitting and pickling (adjusting pH for assisting penetration of tanning agents). In the tanning phase, the protein of the rawhide or skin is converted into a stable material that will not putrefy. Chrome is most frequently used as tanning agent whereby the tanned product obtains a pale blue colour, therefore commonly called "wet blue". In the third phase of crusting, the tanned leather is dried and softened. The crusting often includes processes such as stripping (removal of superficially fixed tannins), fat liquoring (fats, oils and waxes are fixed to the leather fibres), dyeing, whitening, physical softening, and buffing (abrasion of leather surface to reduce grain defects). In the fourth phase, called the finishing phase, the leather is made ready for sale to leather article manufacturers. Finishing operations may include lacquer coating, polishing and embossing. In the fifth phase, a leather article is manufactured, involving processes, which may include cutting, perforating, sewing, leather wrapping, decoration and embossing.

Today's businesses have an increased focus on the individual customer experience. Everything from Coca-Cola™ cans to shoes is customized or personalized. This provides big challenges for manufacturing articles in an economical manner. This is also true for the business in leather articles, such as leather shoes and handbags. Natural leather has been decorated in the past by screen printing. However, screen printing is labour intensive as for each colour an individual screen is required. This is costly and time consuming, especially when personalization or customization is desired.

Digital printing technologies on finished leather have been investigated, but many solutions on finished leather remain of inferior quality. Inkjet technologies from textile printing employing heat transfer paper have been explored for leather printing. However just like inkjet printing directly onto natural leather, it was found that a process of inkjet printing dye-based images onto a sheet of transfer paper and then transferring the images onto tanned leather by heat resulted in a quality unacceptable for many luxury leather products. Examples of such inkjet processes are disclosed in WO 01/32434 A (GILHAM) and US 2016067984 A (CHUNG). Aspects such as image quality, light fading of transferred dyes and scratch resistance needed further improvement.

Recently high quality decorated leather has been obtained by a method of printing "into" tanned leather with UV curable pigmented inks as disclosed by EP 3202581 A (CODUS / AGFA). However, the cured ink layer tends to exhibit cracks after extensive flexing of the decorated leather.

One solution would be to reduce the thickness of the ink layer. GB 2510696 (SERICOL) discloses the use of pigmented hybrid solvent/radiation curable inkjet ink for printing on leather. In the hybrid solvent/radiation-curable ink radiation-curable material is replaced by organic solvents so that the ink comprises at least 50% by weight organic solvent based on the total weight of the ink. However, the use of high amounts of organic solvent leads to deteriorated image quality because of excessive spreading of the ink. Solvent free UV curable inks jetted on a non-porous leather surface can be "frozen" instantaneously by exposure to UV light.

EP 3388490 A1 (AGFA) discloses a manufacturing method for decorating natural leather with a decorative image including the steps of: applying on a crusted leather (45) a base coat (44) containing a pigment for providing a chromatic colour or an achromatic colour different from black; inkjet printing a colour image (43) on the base coat (44) using one or more pigmented UV curable inkjet inks; optionally applying a protective top coat (42) on the image (43); and optionally applying a heat pressing or embossing step; wherein the chromatic colour or the achromatic colour different from black of the base coat and the inkjet printed colour image are used in combination to provide the decorative image.

DE 102016002526 A1 (SCHAEFER) relates to a process for the production of a molding blank or a substrate (5) provided with a coating (4), wherein a coating comprising at least three layers is applied to the substrate, characterized in that - the top layer (1) of the coating (4) by applying an aqueous polyurethane dispersion to a negatively structured silicone matrix, that this top layer (1) with a middle layer (2) and this middle layer (2) with a lower layer (3) and this coating (4) with the lower layer (3) is joined to the substrate (5), or - that the upper layer (1) with the middle layer (2) and the lower layer (3) with the substrate (5) is connected and then the lower layer (3) with the middle layer (2), wherein the layers (1, 2, 3) in their respective compound in largely but not completely dried or still wet or wet state.

Hence, there remains a need for obtaining a more efficient and economical method of manufacturing high

quality decorated natural leather articles allowing personalization and customization.

## Summary of invention

In order to overcome the problems described above, preferred embodiments of the present invention have been realised with a manufacturing method for decorated natural leather according to claim 1.

It was found that leather could be easily personalized by bleaching a laser ablated part of a base coat on a dye crusted leather, wherein the laser ablation was performed according to a decorative pattern. An example is shown in Figure 2.

An another object of the invention relates to the improvement for inkjet printing UV curable pigmented inks that are substantially solvent free. It was surprisingly found that after applying a polymeric layer on the laser ablated and bleached leather that inkjet printed images of UV curable pigmented inks exhibited improved flexing properties.

These and other objects of the present invention will become apparent from the detailed description hereinafter.

## Brief description of drawings

**Figure 1** shows a flow chart of the traditional manufacturing of leather articles involving the different phases and locations.

**Figure 2** shows a photograph of a black dye crusted leather having a decorative image obtained by bleaching the leather that was laser ablated according to the decorative image.

**Figure 3** shows schematically a cross-section of an animal skin including a grain (31) and a corium (33) separated by a junction of grain and corium (32). The different leathers made from the animal skin include full grain leather (34), top grain leather (35) and split leather (36).

## Description of embodiments

### Definitions

The term "crusted leather" or "crust leather" means leather that has been tanned and crusted, but not finished.

The term "monofunctional", as used in monofunctional monomers and oligomers, means containing a single polymerizable group.

The term "polyfunctional", as used in polyfunctional monomers and oligomers, means containing a two, three or more polymerizable groups.

The term "oligomer" means a compound polymerized from 2 to 50 monomers.

### Manufacturing Methods of Decorated Natural Leather

A manufacturing method of decorated natural leather according to a preferred embodiment of the present invention includes the steps of: a) laser ablating part of a base coat on dyed crusted leather; and b) bleaching the laser ablated part with a bleaching agent.

In a second preferred embodiment, the manufacturing method further includes the steps of: c) applying a polymeric layer on at least the bleached laser ablated part; and d) printing one or more inkjet inks on the polymeric layer applied to the bleached laser ablated part.

In the second embodiment of the manufacturing method, the one or more inkjet inks preferably include a white inkjet ink, more preferably a UV curable white pigmented inkjet ink. In addition to providing an improved, the use of a white inkjet ink allows to enhance the colour gamut further.

In the second embodiment of the manufacturing method, the one or more inkjet inks are preferably UV curable pigmented inkjet inks. Pigmented inkjet inks allow for a better light fastness of the decorative image printed on the leather.

In the second embodiment of the manufacturing method, the one or more inkjet inks preferably contain at least 60 wt%, more preferably at least 65 wt% of monofunctional monomers or oligomers based on the total weight of the inkjet ink. The use of a high amounts of monofunctional monomers or oligomers enhances the flexibility of the decorative image on the leather surface decorated by inkjet inks.

In the second embodiment of the manufacturing method, preferably the method further includes between steps c) and d) a step of scanning for localizing bleached laser ablated parts. The scanning step allows for an enhanced productivity when multiple laser ablated and bleaches areas are present on the leather surface.

In the second embodiment of the manufacturing method, the polymeric layer preferably includes a polyurethane

or a copolymer thereof.

The laser used in the manufacturing methods is preferably an infrared laser having an emission wavelength between 780 and 1450 nm, more preferably 820 to 1064 nm.

The leather used in the manufacturing methods preferably contains an infrared dye or pigment in a layer, a so-called base coat, coated on the leather surface. Having such an infrared absorber present speeds up the laser ablation process.

In the manufacturing methods, preferably a protective top coat is applied on at least the area of the leather that was bleached. The top coat preferably includes a polyurethane or a copolymer thereof.

The bleaching in the manufacturing method is preferably performed using a chlorine-based bleach as bleaching agent.

## Decorated Natural Leather and Leather Articles

Natural leather comes in different grades (see Figure 3), such as full grain (34), top grain (35) which is essentially full-grain but with part of the grain layer sanded and the underlying split layer removed, and split leather (36). For the latter, the underlying layer of the hide is removed and used to create split leather. Depending on the thickness of the underlying layer, many splits can be created. Split leather has a rough appearance and is usually used to make suede.

For preventing grain damage and weakness, the hide or skin is tanned preferably by chrome, but other tanning methods such as vegetable tanning may also be used. After tanning, the leather is dried and softened into so-called crusted leather. The crusting may include processes such as stripping (removal of superficially fixed tannins), fat liquoring (fats, oils and waxes are fixed to the leather fibres), dyeing, whitening, physical softening, and buffing (abrasion of leather surface to reduce grain defects).

Another object of the invention is a decorated leather obtained by the above described manufacturing methods.

The decorated natural leather may be used for manufacturing a wide range of leather articles. A leather article including the decorated natural leather obtained by the above described manufacturing methods is preferably selected from the group consisting of footwear, furniture, upholstery, bags, luggage, gloves, belts, wallets, clothing, automotive leather seats, interior decoration, packaging, equestrian leather articles, books and stationary.

## Decorative Images

There is no real limitation on the type of decorative image inkjet printed on the leather using one or more inkjet inks. The decorative image may consist of a single colour or it may include multiple colours such as black, white, cyan, magenta, yellow, red, orange, violet, blue, green and brown.

The decorative image may also include cutting lines for facilitating the cutting of leather pieces. Cutting may be performed manually using these cutting lines, but is preferably done by using some kind of automation for the cutting of leather, such as e.g. implemented in the Versalis™ cutting machines from LECTRA.

Alternatively, no cutting lines are printed, and the whole cutting pattern is stored in a computer. For example, US 5757950 (DUERKOPP ADLER AG) discloses a process for cutting or stamping individual parts from an animal skin in which the contours of the individual parts are stored in a computer and can be assembled to form a cutting pattern, and, for optimizing the cutting, the cutting pattern is established individually as a function of the quality of the skin and is projected by a projection device onto the skin, with which the advantages of large-area nesting can be combined with the advantages of small-area cutting or stamping.

## Laser ablation

Laser ablation is a process of removing material from a solid surface by irradiating it with a laser beam. In the present invention, this solid surface is a pigmented layer coated on the natural leather and is known in the art as a base coat.

A base coat may consist out of a single layer, but usually the base coat consists of multiple layers wherein at least one of them is a pigmented layer.

Laser ablation is preferably performed with a pulsed laser.

The laser is preferably an infrared laser having an emission wavelength between 780 and 1450 nm, more preferably 820 to 1170 nm, and most preferably 920 to 1064 nm.

Preferred lasers include an optically pumped semiconductor laser emitting at 920 nm (Genesis MX 920-4000 MTM from COHERENT), at 1064 nm (Genesis MX 1064-10000 MTM from COHERENT) and emitting at 1154 nm (Genesis MX 1154-6000 MTM from COHERENT).

Bleaching

Bleaching is performed with a bleaching agent. Suitable bleaching agents are oxidizing agents. Bleaches react with colored organic compounds, such as dyes, and turn them into colorless compounds. A preferred powerful oxidizer is chlorine. Since pure chlorine is a toxic corrosive gas, preferably compounds are used that release chlorine when needed. Preferably these chlorine-based bleaches are based on the decomposition of a chlorine compound like hypochlorite or chloramine.

The grade of chlorine-based bleaches is often expressed as percent active chlorine. One gram of a 100% active chlorine bleach has the same bleaching power as one gram of elemental chlorine.

Bleaches usually react with many other organic substances besides the intended colored pigments or dyes, so they can weaken or damage natural materials like leather. Hence, preferably the bleaching agent is used in a concentration of 3 to 15% active chlorine. In an amount higher than 15% active chlorine, the leather tends to suffer too much damage upon extended exposure to the chlorine bleach. In an amount of less than 3% active chlorine, insufficient bleaching may occur or productivity is low because the bleaching process takes too long.

In a preferred embodiment, the bleaching is heat-activated, preferably by hot air, using an oven or an infrared lamp. A suitable infarared lamp is a NIR lamp, such as an Adphos™ NIR lamp having 1 bulb at 5.4 kW maximum power whereby the leather receives 3 passes at 300 mm/s under the infrared lamp. The heating is preferably performed at a temperature larger than 50°C, more preferably 80 to 110°C. A termperature higher than 110°C is preferably avoided for causing damage to the leather.

The most preferred chlorine-based bleach is a solution of sodium hypochlorite (NaClO), preferably a 3 to 15% solution in water. Such a bleach is known in many households as "liquid bleach" or "Javel".

Other examples of chlorine-based bleaches are chloramine, halazone, and sodium dichloroisocyanurate.

Base Coats

The base coat is applied on the crust leather to provide a quality commensurate to the luxury aspect of leather. The base coat may be applied as a single layer, or may be applied as multiple layers. The multiple layers may even have a different composition for improving properties like adhesion or flexibility.

The base coat preferably includes a polymer or copolymer based on polyurethane, as this has been found to improve flexibility to the leather.

Suitable polyurethanes include Urepal™ PU147 and PU181 from CHEMIPAL S.p.A.; Melio™ Promul 61 from STAHL; Astacin™ Finish PS from BASF; Ecrothan™ 4075, 4078 and 4084 from MICHELMAN; Incorez™ CS8073 and CS065-195 from INCOREZ. The dry weight of the polyurethane in the base coat is preferably in the range of 1 to 6 g/m$^2$.

Although polyurethanes are preferred as the polymers for the base coat, other polymers may be used preferably in combination with the polyurethanes. Such polymers preferably have an elongation at break of more than 200%, more preferably 300%. The elongation at break is measured according to ISO527-2, for example, with a MTS Exceed™ testing apparatus from MTS Systems Corporation.

Another type of preferred polymers to be used in the base coat are polyacrylates. Polyacrylates provide good flexibility and stabilize pigment dispersions in the base coat.

In a preferred embodiment, the base coat preferably includes a polymer or copolymer based on polyurethane and polymer or copolymer based on a polyacrylate. Such a combination brings excellent flexibility even in the presence of pigments.

Preferred polyacrylates are Roda™ Base 5514 from TFL and Primal™ HPB980 from LANXESS. A suitable polymeric acrylate emulsion is Bioflex™ KGA from LMF Biokimica.

A cross-linker may be incorporated in the base coat to improve the strength of the base coat and the adhesion to crust leather. Preferred cross-linkers include aldehyde based cross-linkers such as formaldehyde, melamine formaldehyde derivatives, urea formaldehyde resins, glyoxal and glurarаldehyde, epoxides, oxazolines, carbodiimides and isocyanates, isocyanates being particularly preferred. The dry weight of the cross-linker in the base coat is preferably less than 1.4 g/m$^2$, more preferably less than 1.0 g/m$^2$.

The base coat is preferably applied by spraying, but may be applied by any coating technique known, such as knife coating, extrusion coating, slide hopper coating and curtain coating.

The base coat preferably has a colour similar to that of the corium and the grain. Any desired colour may be chosen for the corium or grain and the base coat, such as red, green, brown, black, blue...

Polymeric Layers

While the base coat is preferably an opaque base coat, the polymeric layer is preferably transparent or translucent, most preferably transparent. The polymeric layer is applied to the laser ablated, bleached area to prevent or

reduce penetration of the inkjet ink into the leather.

The polymeric layer preferably has a similar composition as the base coat, with the exception of a pigment being absent. If the polymeric layer would contain a coloured pigment and be applied uniformly on the leather, i.e. also on areas that were not laser ablated and bleached, the colour of the base coat would be undesirably affected.

The bleaching damages the natural leather and has a negative effect on the adhesion of the ink layer to the leather. The presence of the polymeric layer improves the adhesion of the ink layer to the leather after bleaching.

The polymeric layer preferably includes a polymer or copolymer based on polyurethane, as this has been found to improve flexibility to the leather.

Another type of preferred polymers to be used in the polymeric layer are polyacrylates.

Suitable polyurethanes and polyacrylates include those mentioned above for the base coat.

A cross-linker may be incorporated in the polymeric layer to improve the strength of the polymeric layer and the adhesion to crust leather. Preferred cross-linkers are those mentioned above for the base coat.

The polymeric layer is preferably applied by inkjet or spraying, but may be applied by any coating technique known, such as knife coating, extrusion coating, slide hopper coating and curtain coating, or other printing techniques such as flexographic printing, screen printing, inkjet printing and valve jet printing.

## Protective Top Coats

The protective top coat is also transparent. The composition of the top coat may be the same or similar to that of the polymeric layer.

The top coat may be applied as a single layer, or may be applied as multiple layers. The multiple layers may even have a different composition for improving properties like scratch resistance, adhesion or flexibility.

When the decorative image is simply made by laser ablation and bleaching, the protective top coat is applied on at least the laser ablated and bleached area forming the decorative image, but preferably it is applied uniformly over the leather surface.

In the second embodiment of manufacturing decorated leather, the protective top coat is applied on at least the inkjet ink layer, but preferably it is applied uniformly over the leather surface.

## Pigmented Inkjet Inks

The one or more pigmented inkjet inks that are inkjet printed may be selected from aqueous pigmented inkjet inks, solvent based pigmented inkjet inks and radiation curable pigmented inkjet inks. However, the one or more pigmented inkjet inks are preferably one or more radiation curable inkjet inks, most preferably one or more UV curable inkjet inks.

The one or more pigmented inkjet inks preferably contain organic colour pigments as they allow for obtaining a high colour gamut on natural leather. Carbon black and titanium dioxide are inorganic pigments, which can be advantageously used in the present invention for composing black respectively white pigmented inkjet inks.

An organic colour pigment may be chosen from those disclosed by HERBST, Willy, et al. Industrial Organic Pigments, Production, Properties, Applications. 3rd edition. Wiley - VCH , 2004. ISBN 3527305769. Suitable colour pigments are disclosed in paragraphs [0128] to [0138] of WO 2008/074548 (AGFA GRAPHICS) .

In a preferred embodiment, the one or more pigmented inkjet inks form a CMYK(W) or CRYK(W) inkjet ink set. This inkjet ink set may also be extended with extra inks such as red, green, blue, violet and/or orange to further enlarge the colour gamut of the image. The UV curable inkjet ink set may also be extended by the combination of full density inkjet inks with light density inkjet inks. The combination of dark and light colour inks and/or black and grey inks improves the image quality by a lowered graininess. Also so-called spot colour inks may be in order to print a dedicated colour with a single ink.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size of an organic colour pigment and an inorganic black pigment is preferably between 0.050 and 1 μm, more preferably between 0.070 and 0.300 μm and most preferably between 0.080 and 0.200 μm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

A white pigment preferably has a numeric average pigment particle size larger than 180 nm in order to have a

strong opacifying capability. Suitable white pigments are given by Table 2 in [0116] of WO 2008/074548 (AGFA GRAPHICS) . The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548 (AGFA GRAPHICS).

When using UV curable pigmented inkjet inks, polymerizable compounds and at least one photoinitiator is present in the inkjet ink.

Any polymerizable compound commonly known in the art may be employed. The polymerizable compound may be any monomer or oligomer found in the Polymer Handbook Vol 1 + 2, 4th edition, edited by J. BRANDRUP et al., Wiley-Interscience, 1999. An oligomer in the present invention is understood to contain 2 to 8 repeating monomeric units. Preferred monomers and oligomers are those listed in [0106] to [0115] in EP 1911814 A (AGFA) .

Preferably a monomer or oligomer capable of free radical polymerization is used as polymerizable compound. A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used. However preferably an amount of at least 60 to 100 wt% of monofunctional polymerizable compounds is used in the UV curable pigmented inkjet ink with the wt% based on the total weight of the inkjet ink. The viscosity of the radiation curable inkjet inks can be adjusted by varying the amount of specific monomers and oligomers.

The UV curable inkjet ink contains one or more photoinitiators, preferably one or more free radical photoinitiators. A free radical photoinitiator is a chemical compound that initiates polymerization of monomers and oligomers when exposed to actinic radiation by the formation of a free radical.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

In a particularly preferred embodiment, the one or more photoinitiators include an acylphosphine oxide photoinitiator and a thioxanthone photoinitiator. Such a combination allows for fast UV curing with UV LEDS emitting above 370 nm. UV LEDs are more economical in operating the inkjet printing than mercury lamps.

In order to increase the photosensitivity further, the UV curable inkjet ink may additionally contain co-initiators. Suitable examples of co-initiators can be categorized in three groups: (1) tertiary aliphatic amines, such as methyldiethanolamine and N-methylmorpholine; (2) aromatic amines such as 2-(dimethylamino)ethylbenzoate; and (3) (meth)acrylated amines such as dialkylamino alkyl(meth)acrylates and N-morpholinoalkyl-(meth)acrylates. The preferred co-initiators are aminobenzoates.

A preferred amount of photoinitiator and co-initiator is 0.1 to 30 wt%, and most preferably 5 to 10 wt% of the total weight of the UV curable inkjet ink.

The one or more pigmented inkjet inks may contain further additives such as surfactants, polymerization inhibitors and dispersants for the colour pigments.

The preparation of pigmented UV curable inkjet inks is well-known to the skilled person. Preferred methods of preparation are disclosed in paragraphs [0076] to [0085] of WO 2011/069943 (AGFA).

## Inkjet Printing Devices

The one or more inkjet inks are jetted by one or more print heads ejecting small droplets in a controlled manner through nozzles onto natural leather moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head.

A preferred piezoelectric print head is a so-called through-flow piezoelectric drop-on-demand print head. By using through-flow print heads, the reliability is enhanced and thus a more efficient and economical method of manufacturing high quality decorated natural leather articles is obtained. Such a print head is, for example, available from TOSHIBA TEC as the CF1ou print head.

However, the inkjet printing method according to the present invention is not restricted to piezoelectric inkjet printing. Other inkjet print heads can be used and include various types, such as a continuous type print head.

The inkjet print head normally scans back and forth in a transversal direction across the moving leather surface, known as a multi-pass printing mode. Sometimes the inkjet print head does not print on the way back. Bidirectional printing is preferred for obtaining a high areal throughput.

Another preferred printing method is by a "single pass printing process", which can be performed by using page wide inkjet print heads or multiple staggered inkjet print heads that cover the entire width of the leather surface. In a

single pass printing process, the inkjet print heads usually remain stationary and the ink-receiving leather surface is transported under the inkjet print heads.

An advantage of using a multi-pass printing mode is that the liquid UV curable inkjet ink is cured in a consecutive passes, rather than in a single pass that would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for large format crusted leather.

Curing Devices

If aqueous or solvent based pigmented inkjet inks are used, then some curing device for evaporation of water and organic solvents is required. Suitable curing means include a heat radiation means like a hot air dryer, an oven, or an infrared light source, such as an infrared laser, one or more infrared laser diodes or infrared LEDs.

An effective infrared radiation source for aqueous inkjet inks has an emission maximum between 0.8 and 2.5 $\mu$m, preferably between 0.8 and 1.5 $\mu$m. Such an infrared radiation source is sometimes called a NIR dryer.

If UV curable pigmented inkjet inks are used, then curing is usually performed by ultraviolet radiation alone. If so-called hybrid UV curable pigmented inkjet inks containing also water or organic solvents, then the curing device preferably further also includes curing means used for aqueous or solvent based pigmented inkjet inks.

In inkjet printing, the curing device may be arranged in combination with the print head of the inkjet printer, travelling therewith so that the inkjet ink is exposed to curing radiation very shortly after been jetted.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:

- UV-A: 400 nm to 320 nm
- UV-B: 320 nm to 290 nm
- UV-C: 290 nm to 100 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages such as a fast curing speed and a high curing degree.

In a particularly preferred embodiment, the UV curing is performed using UV LEDs having an emission wavelength higher than 370 nm.

For facilitating curing, the inkjet printer may include one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

## EXAMPLES

Materials

All materials used in the following examples were readily available from standard sources such as Aldrich Chemical Co. (Belgium) and Acros (Belgium) unless otherwise specified. The water used was demineralized water.

**TiO2** is a titanium dioxide pigment available as Tronox™ CR834 from TRONOX PIGMENTS BV.

**PB15:4** is an abbreviation used for Hostaperm™ Blue P-BFS, a C.I. Pigment Blue 15:4 pigment from CLARIANT.

**E7701** is a polyacrylate dispersant available as Efka™ 7701 from BASF.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed.

**PEA** is 2-phenoxyethyl acrylate available as Sartomer™ SR339C from ARKEMA.

**IDA** is isodecyl acrylate available as Sartomer™ SR395 from ARKEMA.

**CLA** is a caprolacton acrylate available as Sartomer™ SR495B from ARKEMA.

**VCL** is N-vinyl caprolactam available from BASF BELGIUM, NV.

**DPGDA** is dipropylene glycol diacrylate available as Sartomer™ SR508 from ARKEMA.

**G1122** is a monofunctional urethane acrylate available as Genomer™ 1122 from RAHN having the Formula (B):

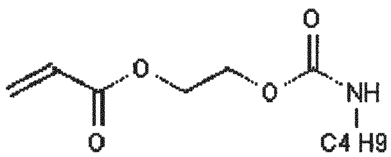

Formula (B).

**CN966H90** is a urethane acrylate oligomer available as Sartomer™ CN966H90 from ARKEMA.

**KT046** is a mixture of photoinitiators available as Esacure™ KTO 46 from FRATELLI LAMBERTI SPA.

**TPO** is trimethylbenzoyl diphenyl phosphine oxide supplied as Omnirad™ TPO by IGM.

**BAPO** is a bis(2,4,6-trimethylbenzoyl)-phenylphosphineoxide photoinitiator available as Irgacure™ 819 from BASF.

**INHIB** is a mixture forming a polymerization inhibitor having a composition according to Table 1.

**Table 1**

| Component | wt% |
|---|---|
| DPGDA | 82.4 |
| p-methoxyphenol | 4.0 |
| BHT | 10.0 |
| Cupferron™ AL | 3.6 |

**Cupferron™ AL** is aluminum N-nitrosophenylhydroxylamine from WAKO CHEMICALS LTD.

**SL7500** is a silicone surfactant available as Silwet™ L7500 from OSI SPECIALITIES BENELUX NV

**T410** is a silicone surfactant available as Tegoglide™ 410 from EVONIK.

**RF5040** is polyurethane dispersion available as Roda™ Fix 5040 Dull from TFL Ledertechnik GMBH.

**RF92** is polyurethane dispersion available as Roda™ Car Dull 92 from TFL Ledertechnik GMBH.

**RF5796** is a silicone preparation available as Roda™ Feel S 5796 from TFL Ledertechnik GMBH.

**RF70** is a water-dispersible polyisocynate available as Roda™ Link C70 from TFL Ledertechnik GMBH.

Measurement Methods

1. Viscosity

The viscosity of the UV curable inkjet inks was measured at 45°C and at a shear rate of 1,000 $s^{-1}$ using a Rotovisco™ RV1 viscometer from HAAKE.

2. Surface Tension

The static surface tension of the UV curable inkjet inks was measured with a KRUSS tensiometer K9 from KRÜSS GmbH, Germany at 25°C after 60 seconds.

3. Average Particle Size

The average particle size (diameter) was determined with a Brookhaven Instruments Particle Sizer BI90plus based upon the principle of dynamic light scattering. The inkjet ink was diluted with ethyl acetate to a pigment concentration of 0.002 wt%. The measurement settings of the BI90plus were: 5 runs at 23°C, angle of 90°, wavelength of 635 nm and graphics = correction function.

4. Flexing

The flexibility was determined on a SATRA™ STM 701 Bally flexometer wherein samples had to endure a cycle of a multiple of 1,000 flexes. The amount of cracks in the leather after the test determines the score. The cracks are

evaluated by the naked eye according to a criterion shown in Table 2.

**Table 2**

| Score | Criterion |
|---|---|
| 5 | No cracks visible. |
| 4 | Small cracks that are visible by the naked eye when leather sample is bent, but invisible when kept flat. |
| 3 | Small cracks clearly visible by the naked eye even when leather sample is kept flat. |
| 2 | Large cracks (> 1cm) observed when leather sample is kept flat. |
| 1 | Pieces of the ink layer come off |

5. CIELab parameters

The reflectance spectrum of each sample was measured three times with a X-Rite™ eXact spectrophotometer in the range from 400 up to 700 nm in steps of 10 nm. The CIELab coordinates were determined for a 2° observer and a D50 light source.

6. CIE76 colour difference

The formula below relates to a measured color difference to a known set of CIELAB coordinates. Given two colors in CIELAB color space, ($L_1$, $a_1$, $b_1$) and ($L_2$, $a_2$, $b_2$), the CIE76 color difference formula is defined as:

$$\Delta E = \sqrt{(L_1 - L_2)^2 + (a_1 - a_2)^2 + (b_1 - b_2)^2}$$

A value for $\Delta E \approx 2.3$ corresponds to a JND (just noticeable difference), as explained in Sharma, Gaurav (2003). Digital Color Imaging Handbook (1.7.2 ed.). CRC Press. ISBN 0-8493-0900-X.

7. Adhesion

The adhesion was determined on a SATRA™ STM 701 Bally flexometer wherein a sample had to endure 20,000 flexes. An evaluation was performed on the clamped area of the leather according to Table 3.

**Table 3**

| Criterion | Observation |
|---|---|
| 0 | No changes visible (=perfect adhesion). |
| 1 | Detachment of very small flakes of the ink layer (< 10% surface area) |
| 2 | Detachment of large flakes of the ink layer |
| 3 | Complete detachment of the ink layer |

**EXAMPLE 1**

This example illustrates the manufacturing method for decorating natural leather wherein a dye crusted natural leather is laser ablated according to a decorative image and followed by bleaching step

Preparation of Decorated Leather

An 20cm x 23 cm piece of black leather was cut from a black dyed crusted bovine leather coated with a black pigmented layer from Conceria Nuti Ivo S.P.A. (Italy).

The leather was on the side of the black pigmented layer exposed to an infrared laser, wherein part of the black pigmented layer was ablated according to a decorative image. The infrared laser was an optically pumped semiconductor laser emitting at 1064 nm (Genesis MX 1064-10000 MTM from COHERENT) with a maximum power of 4.0W, a spot size in X of 78.9 µm at $1/e^2$ and a spot size in Y of 90.6 µm at $1/e^2$. The bitmap design of 100 mm height by 69 mm width had a resolution of 300 dpi and an addressability (distance between dots centre to centre) of 0.085 mm. The

pattern was lasered at a speed of 600 mm/s with a frequency of 7.1 kHz and a pulse length of 125 μm at a power of 4.0 W, resulting in an energy density of 8906 $mJ/cm^2$ (assuming no overlap).

The leather was then on the side of the black pigmented layer exposed at room temperature (20°C) to a bleaching agent (aqueous solution of sodium hypochlorite containing minimum 9 wt% of active chlorine) by spraying. The bleached side of the leather was air dried at a temperature of minimum 45°C for 60 seconds directly after spraying. The spraying of the bleach and the drying were done a second time, then the leather was rinsed and gently brushed with water and hanged to dry overnight at room temperature. The bleaching agent caused a decoloration of the black dyed top grain, but not of the black pigmented layer. A photograph was taken and is shown in Figure 2. The area treated with laser and bleaching agent reached a L* value of 54.

**EXAMPLE 2**

This example illustrates the manufacturing method for decorating natural leather wherein after laser ablation and bleaching, an inkjet ink is applied.

Preparation of Pigmented UV Curable Inkjet Inks

First, a concentrated pigment dispersions were prepared. Then these concentrated pigment dispersions were used to prepare pigmented UV curable inkjet ink according to Table 6.

Concentrated White Pigment Dispersion CPW

A concentrated white pigment dispersion CPW was prepared having a composition according to Table 4.

**Table 4**

| wt% of : | W1 |
|---|---|
| **TiO2** | 50.0 |
| **E7701** | 4.0 |
| **INHIB** | 1.0 |
| **PEA** | 45.0 |

The concentrated white pigment dispersion CPW was prepared by mixing the ingredients of Table 4 for 30 minutes in a vessel equipped with a DISPERLUX™ disperser (from DISPERLUX S.A.R.L., Luxembourg). The polymeric dispersant E7701 was added as a 30% solution in PEA. This mixture was subsequently milled in a DYNO™-MILL ECM Poly from the company WAB Willy A. Bachofen (Switzerland) using 0.40 mm yttrium-stabilized zirconium oxide-beads. The bead mill was filled for 42% with the grinding beads and operated in recirculation mode with a residence time of 10 minutes and using a tip speed of 15 m/s. The milling chamber is water-cooled during the operation.

Concentrated Cyan Pigment Dispersion CPC

A concentrated pigment dispersion CPC was made by mixing the components according to Table 5 for 30 minutes using a DISPERLUX™ disperser from DISPERLUX S.A.R.L., Luxembourg. The dispersion was then milled using a Bachofen DYNOMILL ECM mill filled with 0.4 mm yttrium stabilized zirconia beads ("high wear resistant zirconia grinding media" from TOSOH Co.). The mixture was circulated over the mill for 2 hours. After milling, the concentrated pigment dispersion was discharged over a 1 μm filter into a vessel. The wt% in Table 5 is based on the total weight of the pigment dispersion.

**Table 5**

| Component | wt% |
|---|---|
| **PB15:4** | 25.00 |
| **DB162** | 10.00 |
| **INHIB** | 1.33 |
| **PEA** | 63.67 |

Pigmented UV Curable Inkjet Inks

The UV curable inkjet inks were prepared using the above prepared concentrated pigment dispersions and combining them with the other components according to Table 6. The wt% is based on the total weight of the inkjet ink.

**Table 6**

| wt% of : | White Inkjet Ink | Cyan Inkjet Ink |
|---|---|---|
| **WPC** | 48.00 | --- |
| **CPC** | --- | 10.00 |
| **VCL** | 16.00 | 15.00 |
| **PEA** | --- | 43.80 |
| **CLA** | 8.23 | 10.00 |
| **IDA** | 10.00 | 8.00 |
| **G1122** | 10.00 | --- |
| **CN966H90** | --- | 3.30 |
| **KT046** | 2.95 | --- |
| **TPO** | 4.00 | 5.00 |
| **BAPO** | --- | 2.90 |
| **INHIB** | 0.52 | 1.00 |
| **T410** | 0.30 | --- |
| **SL7500** | --- | 1.00 |

The inkjet inks exhibited the following properties according to Table 7.

**Table 7**

| Physical property | White Inkjet Ink | Cyan inkjet ink |
|---|---|---|
| **Viscosity (45°C)** | 10 | 10 |
| **Surface tension (mN/m)** | 23 | 29 |
| **Average particle size (nm)** | 252 | 102 |

Preparation of Polymeric Layer

A polymeric layer composition PLC was prepared by mixing the following ingredients according to Table 8.

**Table 8**

| wt% of : | PLC |
|---|---|
| **RF5040** | 20 |
| **RF92** | 10 |
| **RF5796** | 1 |
| **RF70** | 3 |
| **Water** | 66 |

Preparation of Decorated Leather

Four A4-size pieces of black leather were cut from a black dyed crusted bovine leather coated with a black

pigmented layer from Conceria Nuti Ivo S.P.A. (Italy).

Four leather samples were prepared according to Table 9.

**Table 9**

| Sample | Laser ablated | Bleached | Polymeric layer |
|---|---|---|---|
| **LS1** | No | No | No |
| **LS2** | Yes | No | No |
| **LS3** | Yes | Yes | No |
| **LS4** | Yes | Yes | Yes |

Leather sample LS1 was prepared by inkjet printing using a Jeti™ Mira moving-gantry flatbed inkjet printer (AGFA) equipped with a D-bulb curing system. First a white background was printed on the black pigmented layer of one piece of leather with the UV curable white inkjet ink at an ink coverage of 150% and the UV curable cyan inkjet ink was then printed on the white background at an ink coverage of 50%. The printed areas were then covered with the composition PLC by spray coating.

Leather sample LS2 was prepared by first laser ablating a rectangular area of 5.5 cm x 8 cm with the same laser as in Example 1. The vector design of 80 mm height by 55 mm width had a resolution of 1270 dpi. The pattern was a hatching pattern where the hatching distance is 0.017 mm. The odd lines were scanned from right to left and the even lines form left to right. When going from one line to the other, the beam was off and going vertically up, perpendicularly to the line just lasered. The pattern was lasered at a speed of 800 mm/s with a frequency of 40.0 kHz and a pulse length of 6 μm at a power of 2.7 W, resulting in an energy density of 289 $mJ/cm^2$ (assuming no overlap). Leather sample LS2 was then inkjet printed with white and cyan inkjet inks and spray coated with composition PLC in the same manner as for leather sample LS1 on the laser ablated area.

Leather sample LS3 was prepared by first laser ablating a rectangular area of 5.5 cm x 8 cm in the same manner as leather sample LS2. The leather was then on the side of the black pigmented layer exposed at room temperature (20°C) to a bleaching agent (aqueous solution of sodium hypochlorite containing 12 to 15wt% of active chlorine) by spraying. The bleached side of the leather was air dried in an oven set at 100°C for 5 minutes directly after spraying. The spraying of the bleach and the drying were done a second time, then the leather was rinsed and gently brushed with water and hanged to dry at room temperature. After a few hours the spraying of the bleach and the drying were done a third time, then the leather was again rinsed and gently brushed with water and hanged to dry overnight at room temperature. Leather sample LS3 was then inkjet printed with white and cyan inkjet inks and spray coated with composition PLC in the same manner as for leather sample LS1 on the laser ablated and bleached area.

Leather sample LS4 was prepared by first laser ablating a rectangular area of 5.5 cm x 8 cm and bleaching the laser ablated in the same manner as leather sample LS3. Next a polymeric layer was applied by coating the composition PLC onto the laser ablated and bleached area. Coating was performed at a thickness of 10 μm, followed by drying for 5 minutes at 100 °C. Leather sample LS4 was then inkjet printed with white and cyan inkjet inks and spray coated with composition PLC in the same manner as for leather sample LS1 on the laser ablated, bleached and provided with the polymeric layer area.

The CIELab parameters of each leather sample were determined and are shown in Table 10. The results for adhesion and flexing are shown in Table 11.

**Table 10**

| Sample | Colour measurement | | | |
|---|---|---|---|---|
| | L* | a* | b* | ΔE |
| **LS1** | 57,66 | -20,13 | -32,97 | reference |
| **LS2** | 37,76 | -4,50 | -4,06 | 38,42 |
| **LS3** | 50,85 | -10,93 | -6,08 | 29,22 |
| **LS4** | 57,11 | -20,05 | -31,70 | 1,39 |

**Table 11**

| Sample | Adhesion | Flexing | | |
|---|---|---|---|---|
| | | 1,000x | 5,000x | 20,000x |
| **LS1** | 2 | 4 | 3 | 1 |
| **LS2** | 0 | 5 | 5 | 4 |
| **LS3** | 2 | 5 | 5 | 4 |
| **LS4** | 0 | 5 | 5 | 4 |

From Table 10 and Table 11, it can be seen that the leather samples LS1 and LS4 have the same colour, but leather sample LS4 has a much better flexibility than LS1. The leather samples LS2 and LS3 demonstrate the necessity of a polymeric layer for obtaining good coloristic properties.

Reference signs list

**Table 12**

| | |
|---|---|
| 31 | Grain |
| 32 | Junction of grain and corium |
| 33 | Corium |
| 34 | Full grain leather |
| 35 | Top grain leather |
| 36 | Split leather |

## Claims

1. A manufacturing method of decorated natural leather including the steps of: a) laser ablating part of a base coat on dyed crusted leather; and b) bleaching the laser ablated part with a bleaching agent.

2. The manufacturing method according to claim 1, further including the steps of:

   c) applying a polymeric layer on at least the bleached laser ablated part; and
   d) printing one or more inkjet inks on the polymeric layer applied to the bleached laser ablated part.

3. The manufacturing method according to claim 2, wherein the one or more inkjet inks include a white inkjet ink.

4. The manufacturing method according to claim 2 or 3 wherein the one or more inkjet inks are UV curable pigmented inkjet inks.

5. The manufacturing method according to any one of claims 2 to 4, further including between steps c) and d) a step of scanning for localizing bleached laser ablated parts.

6. The manufacturing method according to any one of claims 2 to 5, wherein the polymeric layer includes a polyurethane or a copolymer thereof.

7. The manufacturing method according to any one of claims 2 to 6, wherein the one or more inkjet inks contain at least 60 wt% of monofunctional monomers or oligomers based on the total weight of the inkjet ink.

8. The manufacturing method according to any one of claims 1 to 7, wherein the laser is an infrared laser having an emission wavelength between 780 and 1450 nm.

**9.** The manufacturing method according to any one of claims 1 to 8, wherein the leather contains in a base coat on the leather surface an infrared dye or pigment.

**10.** The manufacturing method according to any one of claims 1 to 9, wherein a protective top coat is applied on at least the area of the leather that was bleached.

**11.** The manufacturing method according to any one of claims 1 to 10, wherein the base coat and/or protective top coat includes a polyurethane or a copolymer thereof.

**12.** The manufacturing method according to any one of claims 1 to 11, wherein the bleaching agent is a chlorine-based bleach.

**13.** The manufacturing method according to claim 12, wherein the chlorine-based bleach is used in a concentration of 3 to 15% active chlorine.

**14.** A decorated leather obtained by a manufacturing method according to any one of claims 1 to 13.

**15.** A leather article including the decorated natural leather according to claim 14, wherein the leather article is selected from the group consisting of footwear, furniture, upholstery, bags, luggage, gloves, belts, wallets, clothing, automotive leather seats, interior decoration, packaging, equestrian leather articles, books and stationary.

**Patentansprüche**

**1.** Ein Verfahren zur Herstellung von verziertem Naturleder, umfassend die folgenden Schritte: a) Laserablatieren eines Teils einer Grundierschicht auf gefärbtem Crustleder, und b) Bleichen des laserablatierten Teils mittels eines Bleichmittels.

**2.** Das Herstellungsverfahren nach Anspruch 1, das ferner die folgenden Schritte umfasst:

c) Auftrag einer Polymerschicht auf mindestens den gebleichten laserablatierten Teil, und
d) Drucken einer oder mehrerer Tintenstrahltinten auf die auf den den gebleichten laserablatierten Teil aufgetragene Polymerschicht.

**3.** Das Herstellungsverfahren nach Anspruch 2, wobei die eine oder mehreren Tintenstrahltinten eine weiße Tintenstrahltinte umfassen.

**4.** Das Herstellungsverfahren nach Anspruch 2 oder 3, wobei die eine oder mehreren Tintenstrahltinten UV-härtende pigmenthaltige Tintenstrahltinten sind.

**5.** Das Herstellungsverfahren nach einem der Ansprüche 2 bis 4, das ferner zwischen den Schritten c) und d) einen Schritt, in dem zur Lokalisierung gebleichter laserablatierter Teile abgetastet wird, umfasst.

**6.** Das Herstellungsverfahren nach einem der Ansprüche 2 bis 5, wobei die Polymerschicht ein Polyurethan oder ein Copolymer desselben enthält.

**7.** Das Herstellungsverfahren nach einem der Ansprüche 2 bis 6, wobei die eine oder mehreren Tintenstrahltinten mindestens 60 Gew.-% monofunktioneller Monomere oder Oligomere, bezogen auf das Gesamtgewicht der Tintenstrahltinte, enthalten.

**8.** Das Herstellungsverfahren nach einem der Ansprüche 1 bis 7, wobei der Laser ein Infrarotlaser mit einer Emissionswellenlänge zwischen 780 und 1450 nm ist.

**9.** Das Herstellungsverfahren nach einem der Ansprüche 1 bis 8, wobei das Leder in einer Grundierschicht auf der Lederoberfläche einen Infrarotfarbstoff oder ein Infrarotpigment enthält.

**10.** Das Herstellungsverfahren nach einem der Ansprüche 1 bis 9, wobei auf mindestens den gebleichten Bereich des Leders eine Schutzdeckschicht aufgetragen wird.

11. Das Herstellungsverfahren nach einem der Ansprüche 1 bis 10, wobei die Grundierschicht und/oder die Schutzdeckschicht ein Polyurethan oder ein Copolymer desselben enthält.

12. Das Herstellungsverfahren nach einem der Ansprüche 1 bis 11, wobei das Bleichmittel ein Bleichmittel auf Chlorbasis ist.

13. Das Herstellungsverfahren nach Anspruch 12, wobei das Bleichmittel auf Chlorbasis in einer Konzentration von 3 bis 15% aktivem Chlorid verwendet wird.

14. Ein verziertes Leder, das nach einem Herstellungsverfahren nach einem der Ansprüche 1 bis 13 erhalten ist.

15. Ein Lederartikel, der das verzierte Naturleder nach Anspruch 14 umfasst, wobei der Lederartikel aus der Gruppe bestehend aus Fußbekleidung, Möbeln, Polsterung, Taschen, Gepäck, Handschuhen, Gürteln, Brieftaschen, Bekleidung, Autoledersitzen, Innenausstattungen, Verpackungen, Lederartikeln für Pferdesport, Büchern und Schreibwaren ausgewählt wird.

**Revendications**

1. Procédé de fabrication de cuir naturel décoré comprenant les étapes consistant à: a) éliminer par ablation laser une partie d'une couche de base sur du cuir en croûte teint, et b) blanchir la partie éliminée par ablation laser en utilisant un agent de blanchiment.

2. Procédé de fabrication selon la revendication 1 comprenant en outre les étapes consistant à:

   c) appliquer une couche de polymère sur au moins la partie éliminée par ablation laser et blanchie, et
   d) imprimer une ou plusieurs encres pour impression à jet d'encre sur la couche de polymère appliquée sur la partie éliminée par ablation laser et blanchie.

3. Procédé de fabrication selon la revendication 2, **caractérisé en ce que** lesdites une ou plusieurs encres pour impression à jet d'encre contiennent une encre pour impression à jet d'encre blanche.

4. Procédé de fabrication selon la revendication 2 ou 3, **caractérisé en ce que** lesdites une ou plusieurs encres pour impression à jet d'encre sont des encres pour impression à jet d'encre pigmentées durcissables par rayonnement UV.

5. Procédé de fabrication selon l'une quelconque des revendications 2 à 4, comprenant en outre, entre les étapes c) et d), une étape consistant à balayer le cuir afin de localiser des parties éliminées par ablation laser et blanchies.

6. Procédé de fabrication selon l'une quelconque des revendications 2 à 5, **caractérisé en ce que** la couche de polymère contient un polyuréthane ou un copolymère de celui-ci.

7. Procédé de fabrication selon l'une quelconque des revendications 2 à 6, **caractérisé en ce que** lesdites une ou plusieurs encres pour impression à jet d'encre contiennent au moins 60% en poids de monomères ou oligomères monofonctionnels par rapport au poids total de l'encre pour impression à jet d'encre.

8. Procédé de fabrication selon l'une quelconque des revendications 1 à 7, **caractérisé en ce que** le laser est un laser infrarouge ayant une longueur d'onde d'émission comprise entre 780 et 1450 nm.

9. Procédé de fabrication selon l'une quelconque des revendications 1 à 8, **caractérisé en ce que** le cuir contient un colorant ou pigment absorbant les rayons infrarouges dans une couche de base sur la surface du cuir.

10. Procédé de fabrication selon l'une quelconque des revendications 1 à 9, **caractérisé en ce qu'**il est appliqué une couche supérieure protectrice sur au moins la partie blanchie du cuir.

11. Procédé de fabrication selon l'une quelconque des revendications 1 à 10, **caractérisé en ce que** la couche de base et/ou la couche supérieure protectrice contien(nen)t un polyuréthane ou un copolymère de celui-ci.

12. Procédé de fabrication selon l'une quelconque des revendications 1 à 11, **caractérisé en ce que** l'agent de blanchiment est un agent de blanchiment à base de chlore.

**13.** Procédé de fabrication selon la revendication 12, **caractérisé en ce que** l'agent de blanchiment à base de chlore est utilisé dans une concentration de 3 à 15% de chlore actif.

**14.** Cuir décoré obtenu selon un procédé de fabrication selon l'une quelconque des revendications 1 à 13.

**15.** Article en cuir comprenant le cuir naturel décoré selon la revendication 14, **caractérisé en ce que** l'article en cuir est choisi parmi le groupe composé de chaussures, meubles, garnissage, sacs, valises, gants, ceintures, portefeuilles et portemonnaies, vêtements, sièges auto en cuir, décorations intérieures, emballages, articles équestres en cuir, livres et fournitures de bureau.

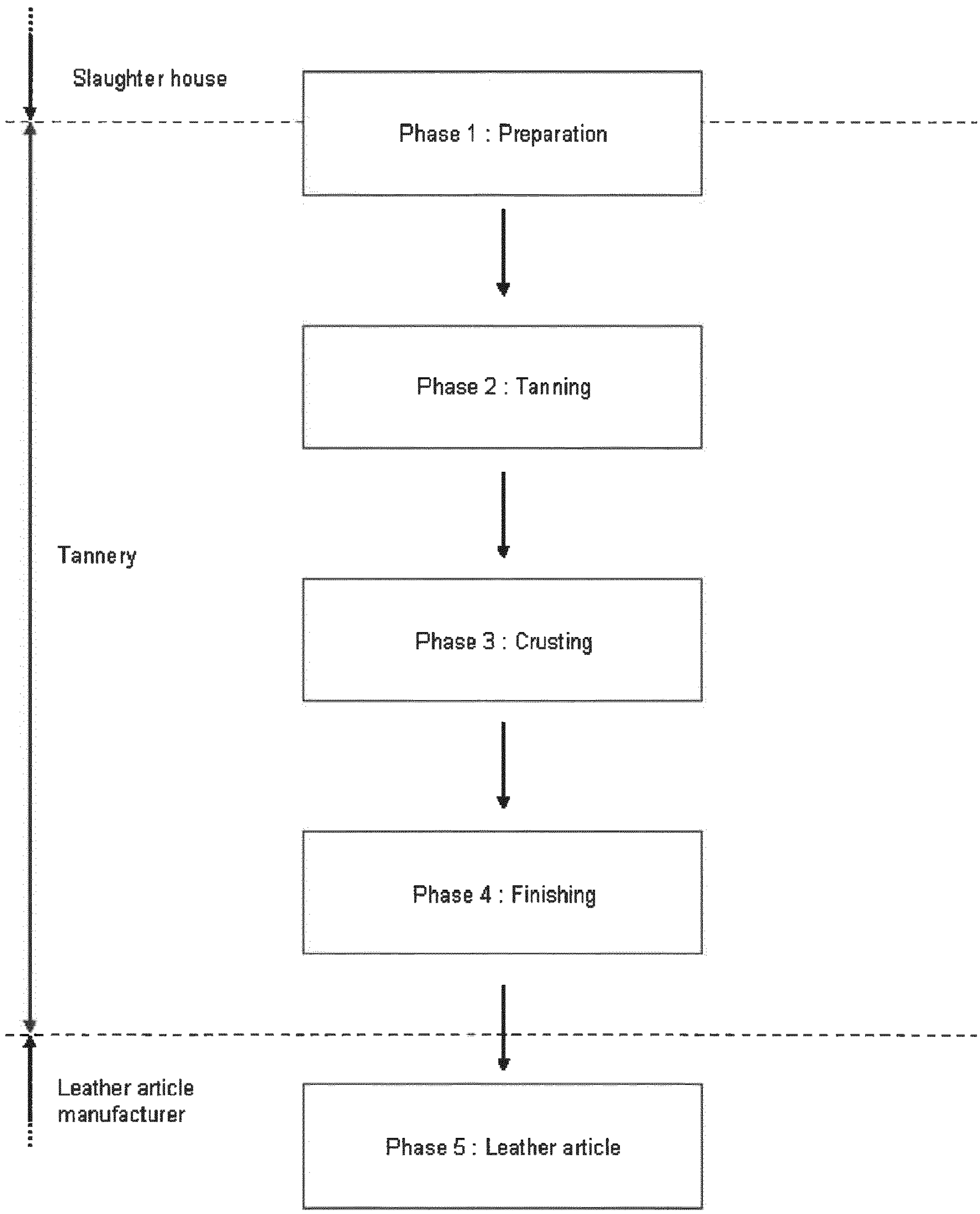
Slaughter house
Phase 1 : Preparation
Phase 2 : Tanning
Tannery
Phase 3 : Crusting
Phase 4 : Finishing
Leather article
manufacturer
Phase 5 : Leather article

Fig. 1

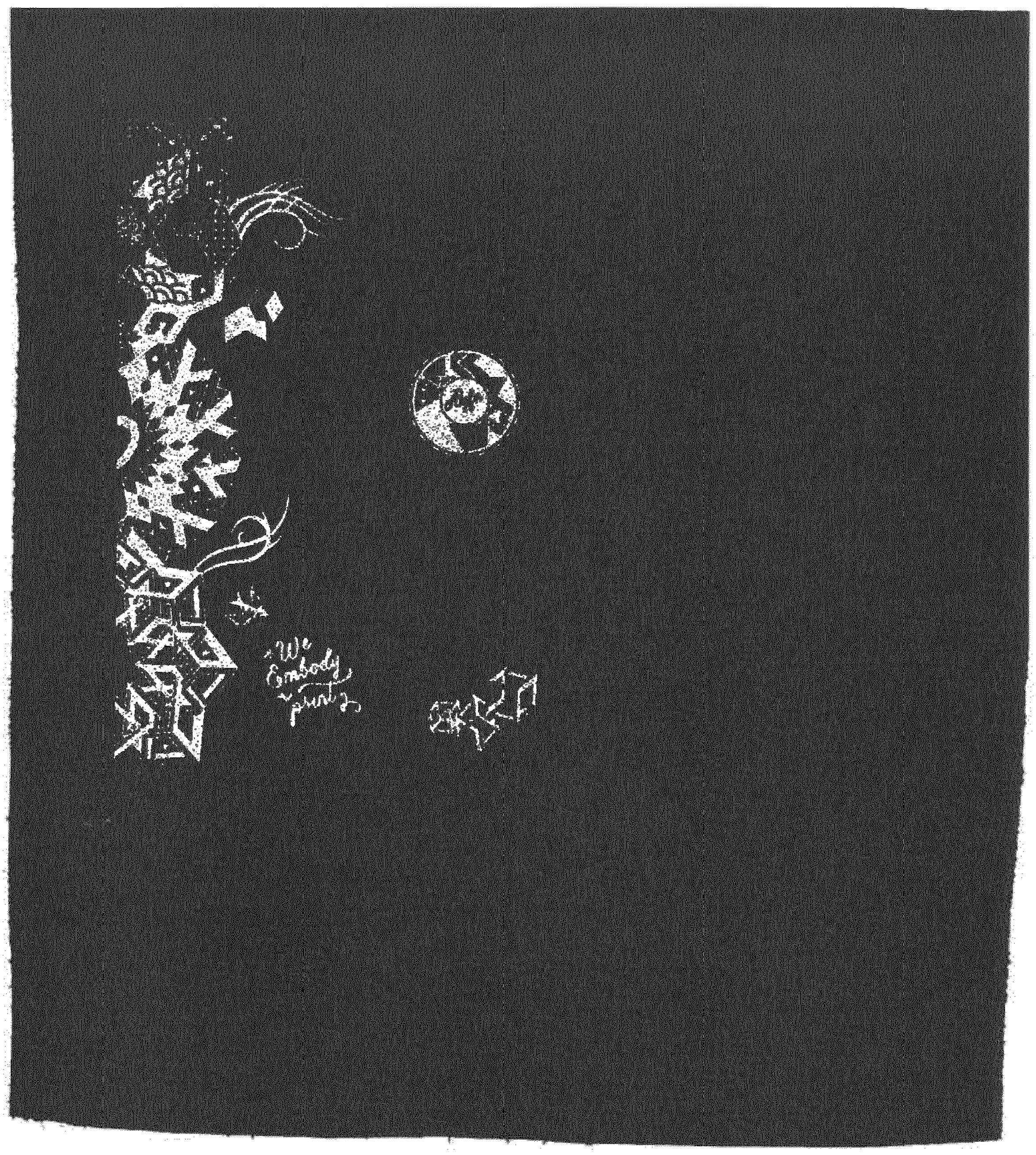

Fig. 2

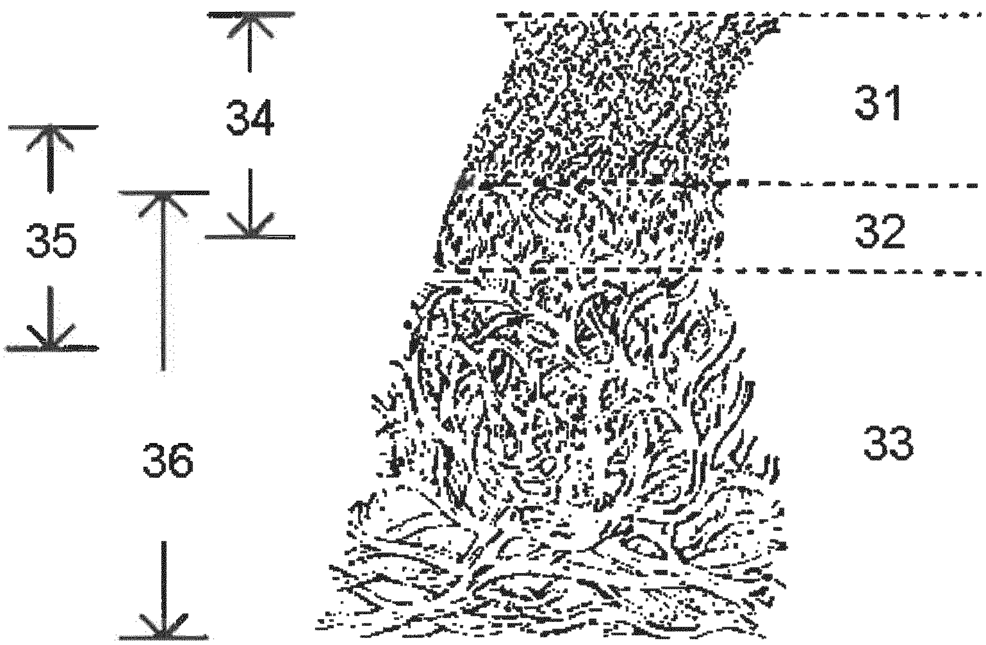


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0132434 A
- US 2016067984 A
- EP 3202581 A
- GB 2510696 A
- EP 3388490 A1
- DE 102016002526 A1
- US 5757950 A
- WO 2008074548 A
- EP 1911814 A
- WO 2011069943 A


### Non-patent literature cited in the description


- **HERBST, WILLY et al.** Industrial Organic Pigments, Production, Properties, Applications. Wiley - VCH, 2004
- **J. BRANDRUP et al.** Polymer Handbook. Wiley-Interscience, 1999, vol. 1 + 2
- **CRIVELLO, J.V. et al.** Photoinitiators for Free Radical Cationic. John Wiley and Sons Ltd, 1998, vol. III, 287-294
- **SHARMA, GAURAV.** Digital Color Imaging Handbook. CRC Press, 2003